**Europäisches Patentamt**

(19) **European Patent Office**

**Office européen des brevets**

(11) Veröffentlichungsnummer: **0 094 654**

**B1**

(12) # EUROPÄISCHE PATENTSCHRIFT

(45) Veröffentlichungstag der Patentschrift:
23.09.87

(51) Int. Cl.⁴: **B 62 D 55/10**

(21) Anmeldenummer: **83104773.3**

(22) Anmeldetag: **14.05.83**

(54) **Raupenfahrzeuggestell.**

(30) Priorität: **17.05.82 US 378699**

(43) Veröffentlichungstag der Anmeldung:
**23.11.83 Patentblatt 83/47**

(45) Bekanntmachung des Hinweises auf die Patenterteilung:
**23.09.87 Patentblatt 87/39**

(84) Benannte Vertragsstaaten:
**DE FR GB IT SE**

(56) Entgegenhaltungen:
**US-A-1 944 393**
**US-A-3 924 703**

(73) Patentinhaber: **DEERE & COMPANY, 1 John Deere Road, Moline Illinois 61265 (US)**

(72) Erfinder: **Smith, Joseph John, 2085 Admiral Street, Dubuque Iowa (US)**
Erfinder: **Erickson, Paul Kevin, 760 Duggan Drive, Apt. 4, Dubuque Iowa (US)**

(74) Vertreter: **Gramm, Werner, Prof. Dipl.- Ing., Patentanwälte Gramm + Lins Theodor- Heuss-Strasse 2, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Raupenfahrzeuggestell mit zwei im Abstand zueinander angeordneten, sich in Fahrtrichtung erstreckenden Hauptrahmen, mit einer zwischen diesen angeordneten und an ihnen im hinteren Bereich festgelegten horizontalen Achse, mit zwei diagonal verlaufenden, sich nach innen und hinten erstreckenden Streben und mit einer Befestigung zur Festlegung der Strebe an dem ihr zugeordneten Hauptrahmen derart, daß das hintere Ende der Strebe an der Achse angelenkt ist.

Eine derartige Ausführungsform läßt sich der deutschen Patentschrift DE-A- 25 18 711 entnehmen. Über die Hauptrahmen sind endlose Fahrzeugketten geführt, während die hinteren Enden dieser Hauptrahmen über die genannte Achse von einem Chassis eines Kraftfahrzeuges aufgenommen werden. Die genannten Streben dienen zum Ausgleich der seitlich auf die Hauptrahmen ausgeübten Zug- bzw. Druckkräfte, die insbesondere beim Wenden des Fahrzeuges auftreten.

Es ist bekannt, z. B. Raupenschlepper mit verbreiterten Ketten auszurüsten, wenn das Fahrzeug auf weichem Untergrund, z. B. auf Schnee, operieren soll. Um ein derartiges Umrüsten auf verbreiterte Ketten durchzuführen, ist es bisher üblich, einen separaten Rahmen oder besondere Diagonalstreben vorzusehen, um so den zur Aufnahme der verbreiterten Ketten erforderlichen vergrößerten Abstand zwischen den beiden Hauptrahmen zu schaffen.

Der Erfindung liegt die Aufgabe zugrunde, das eingangs erläuterte Raupenfahrzeuggestell so zu verbessern, daß bei einem Umrüsten auf verbreiterte Ketten die üblichen Diagonalstreben weiterhin Verwendung finden können.

Diese Aufgabe wird gemäß der Erfindung dadurch gelöst, daß die genannte Befestigung einen Abstandhalter aufweist, der mit seiner einen Seite an dem zugeordneten Hauptrahmen befestigt ist, während die zugeordnete Strebe an einer anderen Seite des Abstandhalters befestigt ist. Dabei ist es vorteilhaft, wenn der Abstandhalter dreiteilig ausgebildet ist, wobei das erste Teil des Abstandhalters eine horizontale Oberseite zur Befestigung der zugeordneten Strebe, im vertikalen Abstand hiervon zwei sich horizontal in entgegengesetzte Richtungen nach außen erstreckende Montageflächen zur Befestigung des Abstandhalters am zugeordneten Hauptrahmen, sowie Oberseite und Montageflächen miteinander verbindende Stirnwandungen aufweist, an denen seitlich im wesentlichen vertikal verlaufende, das zweite und dritte Teil bildende Seittteile befestigt sind, auf deren oberen Rand die Oberseite des ersten Teiles mit je einem horizontalen Abschnitt aufliegt und befestigt ist.

Außerdem können zwischen den beiden Seitenteilen Versteifungen befestigt sein.

Die drei den Abstandhalter bildenden Teile können miteinander verschweißt sein. Auch die Befestigung der Strebe auf der Oberseite des ersten Teils des Abstandhalters sowie die Befestigung der beiden Montageflächen des genannten ersten Teils am zugeordneten Hauptrahmen erfolgt vorzugsweise durch Schweißung.

Die den Abstandhalter bildenden Teile können aus Blech in sehr einfacher Weise hergestellt werden. Dabei kann das erste Teil des Abstandhalters aus einem Blechstreifen bestehen, der in Seitenansicht in Form einer flachen Schüssel gebogen ist, deren Boden die genannte Oberseite zur Befestigung der Strebe und deren Schüsselrand die genannten Montageflächen bilden. Der so gebogene Blechstreifen ist auf beiden Seiten durch die genannten Seitenteile abgedeckt, die einerseits an dem seitlichen Rand des ersten Teils anliegen und andererseits von letzterem übergriffen werden. Dadurch lassen sich die Teile gegenseitig sehr einfach justieren, wobei verhältnismäßig hohe Fertigungstoleranzen möglich sind.

In der Zeichnung ist eine als Beispiel dienende Ausführungsform der Erfindung dargestellt. Es zeigen:

Figur 1 - eine Draufsicht eines Raupenfahrzeuggestells;

Figur 2 - ein Detail der Figur 1 in vergrößertem Maßstabe und

Figur 3 - die Darstellung gemäß Figur 2 in Draufsicht.

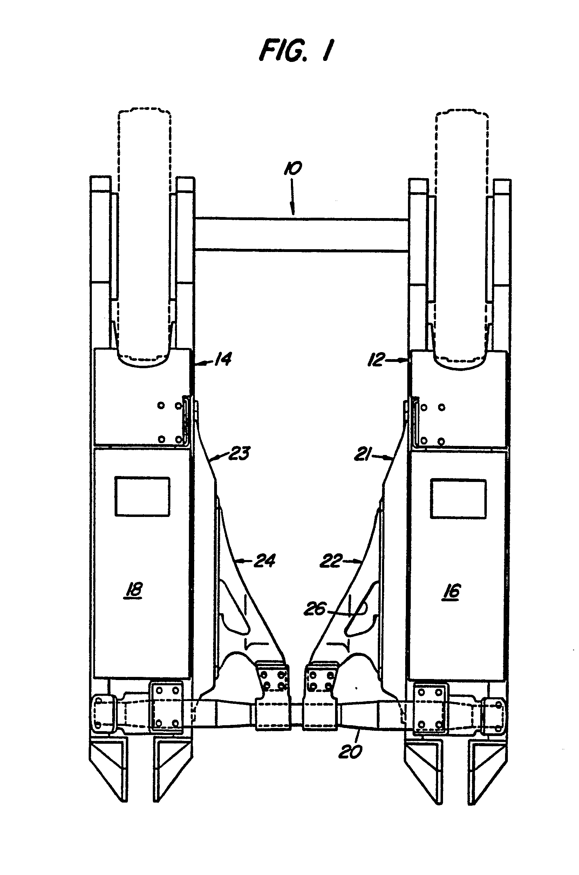

In Figur 1 ist mit 10 ein Raupenfahrzeuggestell gekennzeichnet, das einen rechten Raupenfahrzeugrahmen 12 und einen linken Raupenfahrzeugrahmen 14 aufweist, die beide zur Aufnahme je eines Hauptrahmenteiles 16 bzw. 18 dienen, über die in der Zeichnung nicht dargestellte endlose Fahrzeugketten dargestellt sind. Die hinteren Enden der Hauptrahmenteile 16,18 werden von einem in der Zeichnung nicht dargestellten Chassis eines Kraftfahrzeuges über eine quer verlaufende Achse 20 aufgenommen, die mit ihren beiden Enden in den Hauptrahmenteilen 16, 18 gelagert ist. Um die seitlich auf die Hauptrahmenteile ausgeübten Zug- bzw. Druckkräfte auszugleichen, die insbesondere beim Wenden des Kraftfahrzeuges auftreten, weisen die Raupenfahrzeugrahmen 12, 14 entsprechende diagonal verlaufende Streben 22, 24 auf, die einerseits über je einen Abstandhalter 21, 23 mit dem zugeordneten Hauptrahmen 16 bzw. 18 verbunden und mit ihrem anderen Ende an der Achse 20 angelenkt sind.

Die rechte diagonal verlaufende Strebe 22 weist einen vorderen Arm 26 auf, der auf der Oberseite des Abstandhalters 21 festgeschweißt ist, der seinerseits mittig an der Innenfläche des Hauptrahmens 16 festgeschweißt ist. Der genannte Arm 26 erstreckt sich vom Abstandhalter 21 nach innen und hinten und endet mit seinem hinteren Ende 28 unmittelbar vor der Achse 20 und ist an dieser so angelenkt, wie es in der deutschen Patentschrift 25 18 711 im einzelnen erläutert ist.

Da die linke diagonal verlaufende Strebe 24 gleich der rechten Strebe 22 ist, braucht auf diese nicht weiter eingegangen zu werden.

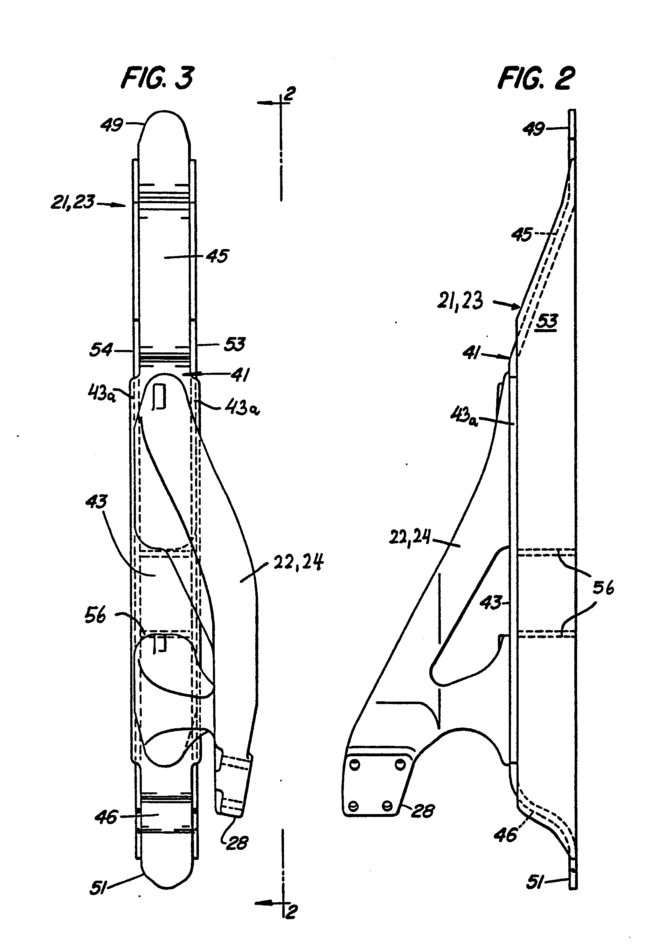

Die Figuren 2 und 3 lassen erkennen, daß jeder Abstandhalter 21, 23 dreiteilig ausgebildet ist und aus einem ersten Teil 41 besteht, das eine im wesentlichen plane horizontale Oberseite 43 aufweist, die vorn und hinten in sich nach außen und in entgegengesetzte Richtungen erstreckende Stirnwandungen 45, 46 übergeht, die ihrerseits in flache, parallel zur Oberseite 43 verlaufende Montageflächen 49, 51 übergehen. Dieses erste Teil 41 ist auf seinen beiden Längsseiten durch je ein Seitenteil 53, 54 abgedeckt, die mit ihrer Flachseite gegen den Seitenrand der Stirnwandungen 45, 46 und mit ihrem Bodenrand gegen den Hauptrahmen 16 bzw. 18 geschweißt sind. Die Oberseite 43 des ersten Teils 41 übergreift mit Längsrändern 43a den oberen Rand der beiden Seitenteile 53, 54 und ist in diesem Bereich gegen letztere verschweißt.

Zwischen den beiden Seitenteilen 53, 54 können Versteifungen 46 vorgesehen sein, die in den Figuren 2 und 3 gestrichelt angedeutet sind.

Das dargestellte Ausführungsbeispiel läßt erkennen, daß die drei den Abstandhalter 21 bzw. 23 bildenden Teile 41, 53 und 54 aneinanderanliegen und sich teilweise gegenseitig übergreifen, so daß sich zwischen den drei Teilen eine Selbstjustierung ergibt, die große Fertigungstoleranzen zuläßt. Die drei Teile lassen sich sehr einfach aus Blech herstellen und ohne großen Bearbeitungsaufwand miteinander verbinden. Dadurch ist es möglich, unter Beibehaltung der üblichen diagonal verlaufenden Streben 22, 24 bei der Umrüstung auf breitere Ketten in einfacher Weise einen entsprechend angepaßten Abstandhalter 21, 23 vorzusehen.

**Patentansprüche**

1. Raupenfahrzeuggestell (10) mit zwei im Abstand zueinander angeordneten, sich in Fahrtrichtung erstreckenden Hauptrahmen (16, 18), mit einer zwischen diesen angeordneten und an ihnen im hinteren Bereich festgelegten horizontalen Achse (20), mit zwei diagonal verlaufenden, sich nach innen und hinten erstreckenden Streben (22, 24) und mit einer Befestigung (41-54) zur Festlegung der Strebe (22, 24) an dem ihr zugeordneten Hauptrahmen (16, 18) derart, daß das hintere Ende (28) der Strebe (22,24) an der Achse (20) angelenkt ist, dadurch gekennzeichnet, daß die genannte Befestigung (41 - 54) einen Abstandhalter (21, 23) aufweist, der mit seiner einen Seite an dem zugeordneten Hauptrahmen (16, 18) befestigt ist, während die zugeordnete Strebe (22, 24) an einer anderen Seite des Abstandhalters (21, 23) befestigt ist.

2. Raupenfahrzeuggestell nach Anspruch 1, dadurch gekennzeichnet, daß der Abstandhalter (21, 23) dreiteilig ausgebildet ist.

3. Raupenfahrzeuggestell nach Anspruch 2, dadurch gekennzeichnet, daß das erste Teil (41) des Abstandhalters (21, 23) eine horizontale Oberseite (43) zur Befestigung der zugeordneten Strebe (22, 24), im vertikalen Abstand hiervon zwei sich horizontal in entgegengesetzte Richtungen nach außen erstreckende Montageflächen (49,51) zur Befestigung des Abstandhalters (21,23) am zugeordneten Hauptrahmen (16, 18), sowie Oberseite (43) und Montageflächen (49, 51) miteinander verbindende Stirnwandungen (45, 46) aufweist, an denen seitlich im wesentlichen vertikal verlaufende, das zweite und dritte Teil bildende Seitenteile (53, 54) befestigt sind, auf deren oberen Rand die Oberseite (43) des ersten Teiles (41) mit je einem horizontalen Abschnitt (43a) aufliegt und befestigt ist.

4. Raupenfahrzeuggestell nach Anspruch 3, dadurch gekennzeichnet, daß zwischen den beiden Seitenteilen (53,54) Versteifungen (56) befestigt sind.

**Claims**

1. In a track frame assembly (10) including transversely spaced fore-and-aft extending main frame portions (16, 18), a transverse horizontal pivot shaft means (20) extending between and connected to the main frame portions (16, 18) at a rearward location thereof, two inwardly and rearwardly extending generally diagonal braces (22, 24), and means (41 - 54) for securing a respective diagonal brace (22,24) to a respective one of said main frames (16, 18) such that the rearward section (28) of said braces (22, 24) are pivotally connected to said pivot shaft means (29),

characterized in that said securing means (41 - 54) includes a spacer (21, 23) fixably mounted to said main frame (16, 18) along one side and having said respective diagonal brace (22, 24) fixably mounted to another side of said spacer (21, 23).

2. A track frame assembly according to claim 1, characterized in that said spacer (21, 23) comprises three members.

3. A track frame assembly according to claim 2, characterized in that the first member (41) of said spacer (21, 23) comprises a horizontal top surface (43) for fixably mounting the respective diagonal brace (22, 24), vertically spaced from said top surface (43) two horizontal opposite outwardly extending mounting walls (49, 51) for fixably mounting the spacer (21, 23) to the respective main frame (16, 18), and end walls (45, 46) connecting top surface (43) and mounting walls (49, 51) together, whereby two side walls (53, 54) being the second and third member and extending generally vertically are fixably mounted along a portion of the inward surface to said end walls (45, 46), said top surface (43) of said first member (41) having a portion (43a) over and horizontally extending beyond a portion of the top side of said side walls (53, 54) and fixably mounted thereto.

4. A track frame assembly according to claim 3, characterized in that a plurality of stiffers (56) are fixably mounted to and extending between said side walls (53, 54).

## Revendications

1. Châssis (10) pour véhicule à chenilles, comportant deux parties de châssis principales (16, 18) s'étendant dans le sens de la marche et disposées selon un certain écartement l'une par rapport à l'autre, un essieu horizontal (20) disposé entre ces parties de châssis et fixé sur elles dans leur portion arrière, deux contrefiches (22, 24) orientées en diagonale et s'étendant vers l'intérieur et vers l'arrière, et un système de fixation (41 - 54) pour le maintien des contrefiches (22, 24) sur la partie de châssis principale conjuguée (16, 18) de telle sorte que l'extrémité arrière (28) des contrefiches (22, 24) soit articulée sur l'essieu (20), caractérisé en ce que le système de fixation précité (41, 54) comporte un élément d'écartement (21, 23) qui est fixé par un côté sur la partie de châssis principale conjuguée (16, 18), tandis que la contrefiche conjuguée (22, 24) est fixée sur l'autre côté de l'élément d'écartement (21, 23).

2. Châssis de véhicule à chenilles suivant la revendication 1, caractérisé en ce que l'élément d'écartement (21, 23) est formé de trois parties.

3. Châssis de véhicule à chenilles suivant la revendication 2, caractérisé en ce que la première partie (41) de l'élément d'écartement (21, 23) présente une face supérieure horizontale (43) pour la fixation de la contrefiche conjuguée (22, 24), à une certaine distance de celle-ci dans le sens vertical, deux surfaces de montage (49, 51) s'étendant horizontalement vers l'extérieur dans des directions opposées pour la fixation de l'élément d'écartement (21, 23) sur la partie de châssis principale conjuguée (16, 18), ainsi que des parois terminales (45, 46) reliant entre elles la face supérieure (43) et les surfaces de montage (49, 51), sur lesquelles sont fixées latéralement des parties latérales (53, 54) orientées en principe verticalement et formant la seconde et la troisième parties, la face supérieure (43) de la première partie (41) reposant et étant fixée sur le bord supérieur de ces parties latérales chaque fois par un tronçon horizontal (43a).

4. Châssis pour véhicule à chenilles suivant la revendication 3, caractérisé en ce que des éléments de raidissement (56) sont fixés entre les deux parties latérales (53, 54).

FIG. 1

FIG. 3

FIG. 2